# EUROPEAN PATENT SPECIFICATION

(11) **EP 1 457 404 B1**
(45) Date of publication and mention of the grant of the patent: **20.06.2007**
(21) Application number: 04005439.7
(22) Date of filing: 08.03.2004
(51) Int. Cl.: B62D 1/04, G05G 1/04

(54) **Steering wheel switch**
Lenkradschalter
Interrupteur pour volant de direction

(30) Priority: 14.03.2003 JP 2003070248
(43) Date of publication of application: 15.09.2004
(73) Proprietor: ALPS ELECTRIC CO., LTD., Tokyo 145-8501 (JP)
(72) Inventor: Sugino, Naoki c/o Alps Elec. Co., Ltd., Tokyo 145-8501 (JP); Suda, Kenji c/o Alps Elec. Co., Ltd., Tokyo 145-8501 (JP)
(74) Representative: Klunker . Schmitt-Nilson . Hirsch

(56) References cited:
- GB-A- 385 469
- US-A- 1 580 169
- PATENT ABSTRACTS OF JAPAN vol. 2002, no. 10, 10 October 2002 (2002-10-10) -& JP 2002 166833 A (ALPS ELECTRIC CO LTD), 11 June 2002 (2002-06-11) -& EP 1 211 119 A (ALPS ELECTRIC CO LTD) 5 June 2002 (2002-06-05)

## Description

### BACKGROUND OF THE INVENTION

### 1. Field of the Invention

The present invention relates to a switch according to the preamble of claim 1. Specifically, the invention relates to a "steering wheel switch", i.e. a that is mounted onto a steering wheel of an automobile and that is for operating various devices such as an automatic shift. A switch of the type defined by the preamble of claim 1 is known from JP 2002 166833.

### 2. Description of the Related Art

There are known technologies for disposing a plurality of steering switches at arbitrary positions on an automobile steering wheel and allowing the driver to, for example, manually upshift or downshift in a drive range by selectively operating the steering switches while driving.

There is a known in-vehicle steering switch having a plurality of operating knobs disposed on the front or on both the front and back of a pad formed on the inside of a rim of the steering wheel, wherein each operating knob contains a push switch. The push switch includes a movable contact and a fixed contact. When the operating knob is not pushed, the movable contact inside the push switch is detached from the fixed contact and is not activated. When the operating knob is pushed, the movable contact inside the corresponding push switch contacts the fixed contact and is activated.

A steering switch with such a structure, however, requires at least two operating knobs for switching between two different controls. When switching between the two different controls, such as upshift and downshift, the driver will have to move his or her hand a lot from one operating knob to another operating knob. From this point of view, the operation of known steering switches still has much to be improved. By disposing steering switches having the same function on both the left and right sides of the pad of the steering wheel, the usability of the steering switch improves because the driver holding the rim of the steering wheel can choose whichever steering switch is easier to operate. In such a case, however, to enable switching between the two different controls, two operating knobs must be disposed on both the left and right sides of the pad, which is, in other words, a total of four operating knobs per pad. This requires a wide space and thus reduces the flexibility in the design of the steering wheel since there will not be enough space to mount other operating devices onto the steering wheel.

Taking the above-mentioned problems into consideration, a known steering switch(cf., Japanese Unexamined Patent Application Publication No. 2002-166833) has a support that is fixed onto a spoke extending inside a rim of a steering wheel and an operating knob rotatably supported by the support and operated by a pushing or pulling action. The steering switch is structured so that two different electrical signals are output depending on the pushing or pulling action. The steering switch can continuously switch between two different controls by using one operating knob that can be operated by a pushing or pulling action. For this reason, this steering switch has greatly improved operation compared to the above-mentioned known steering switch. Also, since the number of necessary operating knobs can be reduced, the space required for attaching the steering switches can be substantially reduced.

### SUMMARY OF THE INVENTION

As described above, the known structure of a switch enables one operating knob rotatably fixed onto a support to switch between two different controls. Accordingly, the known in-vehicle steering switch will have good operation and will require substantially less attachment space. The known steering switch, however, has a support and an operating knob extending into almost opposite directions on both sides of the rotational axis of the operating knob. Therefore, each known steering switch requires a relatively wide space for attachment. As a result, the design flexibility of the steering switch is reduced by limiting the attachment space for other operating devices disposed onto the steering wheel. In particular, recently, the request for disposing various operating devices onto the steering wheel has increased, and, thus, a compact steering switch having a desirable space factor is in demand.

The present invention has taken into consideration the known technologies, and its object is to provide an in-vehicle steering wheel having good operation and a desirable space factor.

In order to achieve the above-mentioned object, the switch according to the present invention comprises the features of claim 1.

The steering switch structured as described in the above can be pushed to rotate the operating knob from a rotationally neutral position and can be pulled to rotate the operating knob in the opposite direction. An electric signal that corresponds to the rotational direction of the pushed or pulled operating knob is output from the output switching unit. In this way, one operating knob can selectively switch between two different controls, and, thus, the number of required operating knobs can be reduced. When the operating knob is no longer pushed or pulled, the urging force of the elastic urging portion automatically returns the operating knob to the rotationally neutral position. In this way, the steering switch can smoothly and continuously switch between different controls. Moreover, the attachment portions and the operating knob of the steering switch are disposed between the rim of the steering wheel and the rotational axis of the operating knob. Therefore, the attachment portions of the support and the operating knob overlap when viewed from the driver's seat. In this way, the steering switch has a desirable space factor without largely limiting the attachment space for other operating devices mounted onto the steering wheel.

In the above-mentioned structure, either the support or the operating knob has a cam surface. A pusher is interposed between the cam surface and the elastic urging portion and slidably presses against the cam surface. By disposing the pusher on a depression of the cam surface, the operating knob is maintained at the rotationally neutral position and then rotates away from this position. At the same time, the pusher moves to the projection of the cam surface against the urging force of the elastic urging portion. This structure enables a simple mechanism that ensures the operating knob to be maintained at the rotationally neutral position and to automatically return to the rotationally neutral position after the steering switch is pushed or pulled.

In the above-mentioned structure, the output switching unit comprises a rotary slider unit that has a slider and is fixed to the operating knob and a circuit board that has conductive patterns and is fixed onto the support. By structuring the output switching unit so that the slider slides on the conductive pattern by rotating the operating knob, a switching mechanism that switches the on and off states at a desired operational stroke can be structured easily. The support has a pair of attachment portions and a pair of bridgings, which are substantially parallel to each other and extend between the attachment portions and the connecting portion. The elastic urging portion is disposed along one of the bridgings and the other bridging is fixed to the circuit board. In this way, there will be space for disposing the spoke of the steering wheel between the pair of bridgings, and, thus, the space factor increases even more.

The present invention includes the embodiment described in the following and offers the advantages described below.

The present invention has a compact design in which the attachment portion of the support and the operating knob overlaps when viewed from the driver's seat. The present invention also enables the driver to selectively switch between two different controls by using one operating knob. When an operating force is no longer applied, the operating knob automatically resets. Thus, the operation and space factor of the in-vehicle steering switch is desirable and the flexibility in designing how to attach various operating devices on the steering wheel is improved.

### BRIEF DESCRIPTION OF THE DRAWINGS

Fig. 1 is an exploded perspective view of an in-vehicle steering switch according to an embodiment of the present invention;
Fig. 2 is a front view of a steering wheel with steering switches according to the present invention attached to the left and right sides;
Fig. 3 is a perspective view of the steering switch viewed from an angle from below;
Fig. 4 is a perspective view corresponding to Fig. 3 wherein the lower cover of the steering switch is removed;
Fig. 5 is a perspective view of the steering switch viewed from an angle from above;
Fig. 6 is a perspective view corresponding to Fig. 5 wherein the upper cover of the steering switch is removed;
Fig. 7 illustrates a self-returning mechanism of the steering switch; and
Fig. 8 illustrates the on/off switching action of the steering switch.

### DESCRIPTION OF THE PREFERRED EMBODIMENT

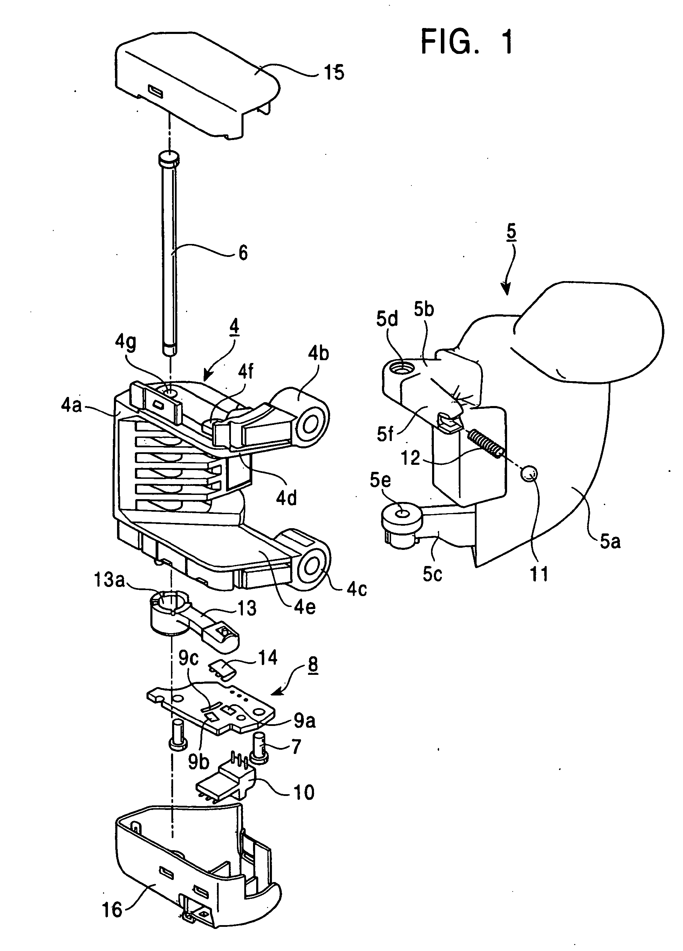

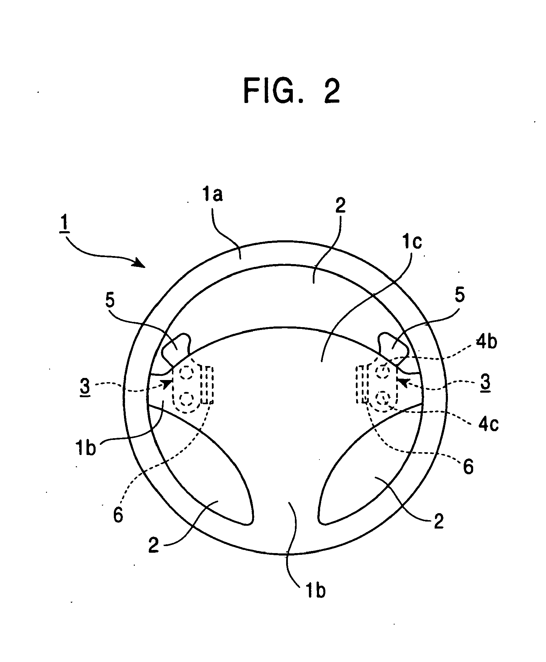

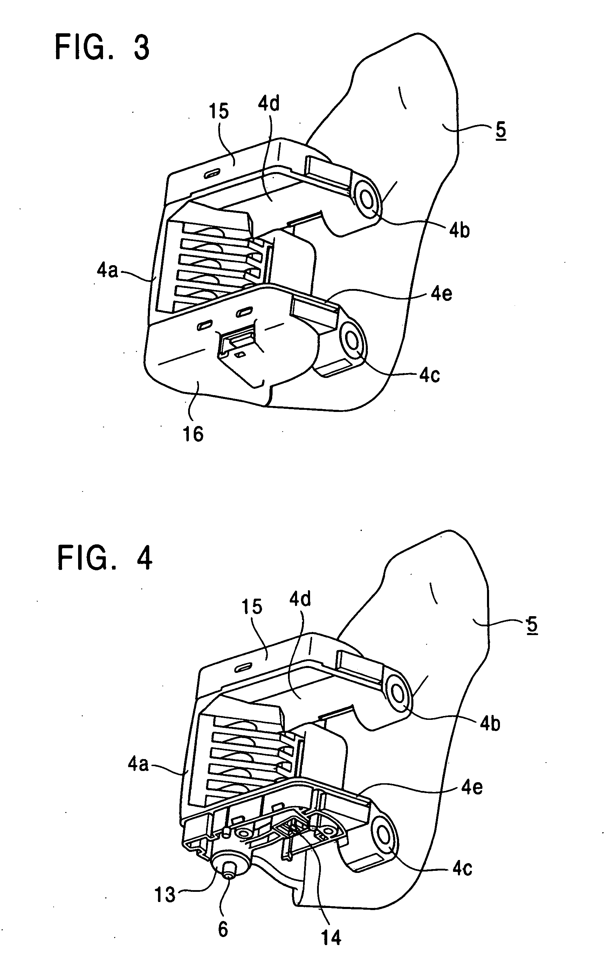

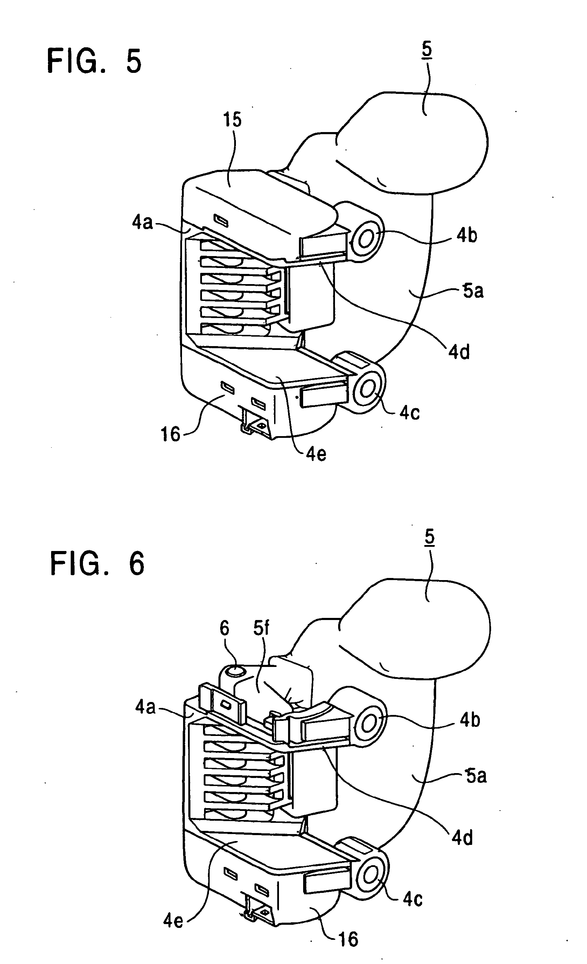

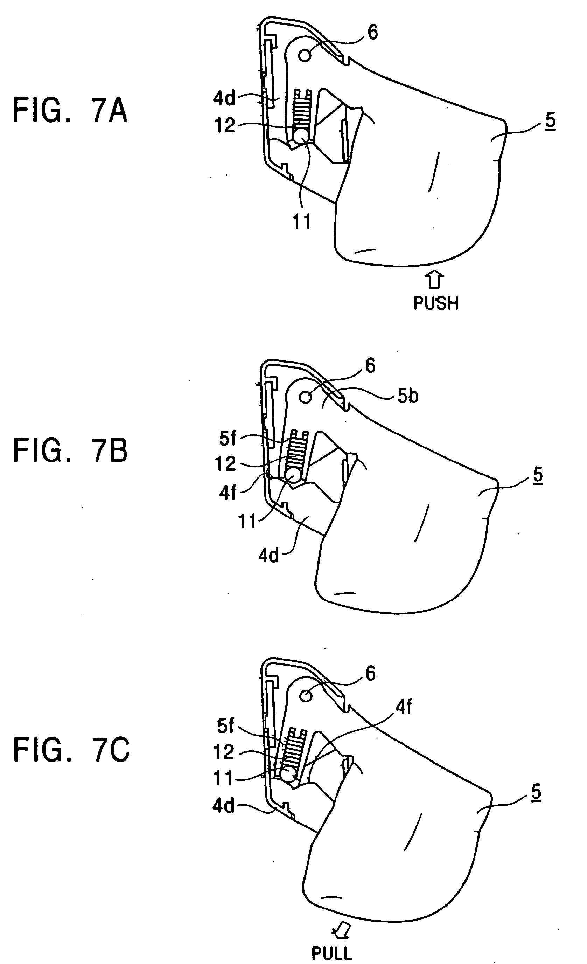

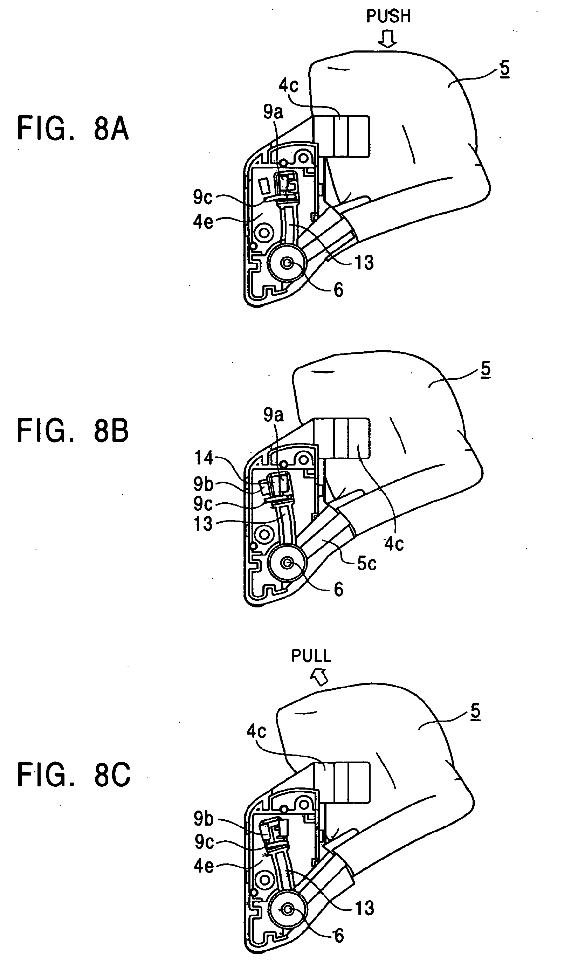

In the following, an embodiment of the present invention is described by referring to the drawings. Fig. 1 is an exploded perspective view of an in-vehicle steering switch according to an embodiment of the present invention. Fig. 2 is a front view of a steering wheel with the steering switches according to the present invention attached to the left and right sides. Fig. 3 is a perspective view of the steering switch viewed from an angle from below. Fig. 4 is a perspective view corresponding to Fig. 3 wherein the lower cover of the steering switch is removed. Fig. 5 is a perspective view of the steering switch viewed from an angle from above. Fig. 6 is a perspective view corresponding to Fig. 5 wherein the upper cover of the steering switch is removed. Fig. 7 illustrates a self-return mechanism of the steering switch. Fig. 8 illustrates the on/off switching action of the steering switch.

As shown in Fig. 2, a steering wheel 1 disposed on a vehicle includes a circular rim 1a, spokes 1b extending inwards from the rim 1a, and a pad 1c covering the spokes 1b almost entirely. A plurality of openings 2 (e.g., three openings 2) is defined by the inner perimeter of the rim 1a and the pad 1c. On both the left and right sides of the pad 1c, in-vehicle steering switches 3 are disposed. A part of each steering switch 3 protrudes inwards, from the back side of the pad 1c, to the opening 2 in the vicinity of the steering switch 3 (e.g., the upper opening 2). In this embodiment, the two in-vehicle steering switches 3 disposed on the left and right of the pad 1c are symmetrical and are structured and operated basically in the same manner. Therefore, hereinafter, the in-vehicle steering switch 3 illustrated on the right of Fig. 2 is referred to.

As shown in Figs. 1 and 2, the in-vehicle steering switch 3 includes a support 4 that is mounted onto one of the spokes 1b of the steering wheel 1, an operating knob 5 protruding into one of the openings 2 of the steering wheel 1, and a metal connecting pin 6 functioning as a rotary shaft of the operating knob 5. The operating knob 5 is rotatably fixed onto a connecting portion 4a of the support 4 by the connecting pin 6. When the driver pushes or pulls the operating knob 5 with his or her hand or finger, two different electrical signals are output depending on the rotational direction of the operating knob 5 in accordance with the pushing or pulling action of the operating knob 5. In this way, the steering switch 3 can switch between two different controls, i.e., upshift and downshift.

The support 4 includes the connecting portion 4a having a shaft hole 4g in which the connecting pin 6 is passed through, a pair of upper and lower attachment portions 4b and 4c screwed onto the spoke 1b, a pair of upper and lower bridgings 4d and 4e substantially parallel to each other and extending between each attachment portion 4b and 4c and the connecting portion 4a. As shown in Figs. 1 and 7, the upper bridging 4d has a cam surface 4f substantially V-shaped from a plan view. As shown in Figs. 1 and 4, a circuit board 8 is screwed onto the lower bridging 4e with a screw 7. On the circuit board 8, resistive patterns 9a and 9b and a pantographic pattern 9c are formed. Each pattern 9a, 9b, or 9c is led out to external circuits via a connector 10 or a cable not illustrated in the drawings.

The operating knob 5 has a knob body 5a for carrying out the pushing or pulling action, and a pair of upper and lower arms 5b and 5c protruding substantially parallel to each other from one of the sides functioning as a rear anchor of the knob body 5a. The connecting pin 6 is passed through shaft holes 5d and 5e formed on the arms 5b and 5c. The upper arm 5b is shaped so that it bends at an acute angle near the shaft hole 5d. The rectangular cylinder that extends linearly from the tip of the bended shaft hole 5d is a holder 5f. The holder 5f is disposed along the bridging 4d of the support 4. The holder 5f contains a ball 11 that is a pusher and a spring 12 for urging the ball 11 against the cam surface 4f of the support 4. A rotary slider unit 13 is engaged with the tip of the lower arm 5c. The rotary slider unit 13 is disposed along the bridging 4e of the support 4. The rotary slider unit 13 has a shaft hole 13a for passing through the connecting pin 6 that has been passed through the shaft hole 5e of the arm 5c. The rotary slider unit 13 also has a slider 14 that slides along the patterns 9a to 9c on the circuit board 8.

As shown in Fig. 2, the in-vehicle steering switch 3 is designed so that the attachment portions 4b and 4c of the support 4 and the operating knob 5 are positioned between the rim 1a of the steering wheel 1 and the rotational axis of the operating knob 5. In other words, the steering switch 3 is designed so that a large part of the support 4 excluding the connecting portion 4a and the operating knob 5 overlaps when viewed from the driver's seat. Therefore, the steering switch 3 has a relatively small dimension in the horizontal direction.

The operating knob 5 of the in-vehicle steering switch 3 is rotatably fixed to the connecting portion 4a of the support 4. Thus, when the operating knob 5 is rotated by applying an operating force of pushing or pulling, the holder 5f rotates relative to the bridging 4d and the rotary slider unit 13 rotates relative to the bridging 4e and the circuit board 8. When the operating knob 5 is in a rotationally neutral position, the ball 11 is positioned in the depression of the cam surface 4f. When the operating knob 5 rotates away from a rotationally neutral position, the ball 11 moves to the protrusion of the cam surface 4f as it urges the spring 12. When the operating force is no longer applied, the biasing force (returning force) of the spring 12 causes the operating knob 5 to automatically return to the rotationally neutral position. When the operating knob 5 is in the rotationally neutral position, the slider 14 is in a position in which it does not contact the resistive patterns 9a and 9b. When the operating knob 5 rotates for a predetermined amount from the rotationally neutral position, the slider 14 contacts the resistive patterns 9a and 9b. In this way, the circuit board 8 with the resistive patterns 9a and 9b and the slider 14 function as an output switching unit. As shown in Figs. 3 to 6, the in-vehicle steering switch 3 has an upper cover 15 covering the holder 5f disposed on the bridging 4d and a lower cover 16 covering the circuit board 8 and the rotary slider unit 13 disposed on the bridging 4e.

In the following, the operation of the in-vehicle steering switch 3 having the above-mentioned structure is described by mainly referring to Figs. 7 and 8.

When the operating knob 5 is not operated and no operating force is applied, as shown in Fig. 7B, the operating knob 5 is urged against the depression of the cam surface 4f by the spring 12. Therefore, the operating knob 5 is maintained stably at the rotationally neutral position. At this time, as shown in Fig. 8B, the slider 14 attached to the rotary slider unit 13 is not in contact with the resistive patterns 9a and 9b on the circuit board 8. Thus, the in-vehicle steering switch 3 is turned off.

When the driver holding the rim 1a of the steering wheel 1 pushes in the operating knob 5 with his or her thumb while the steering switch 3 is turned off, the operating knob 5 rotates around the connecting pin 6 in the direction it was pushed, as shown in Fig. 7A. At the same time, the ball 11 moves to one of the projections of the cam surface 4f while urging the spring 12. Then, when the operating knob 5 rotates a predetermined amount from the rotationally neutral position in the direction the operating knob 5 was pushed, as shown in Fig. 8A, the slider 14 contacts the resistive pattern 9a. Accordingly, electricity is conducted to the resistive pattern 9a and the pantographic pattern 9c via the slider 14 and the steering switch 3 is turned on. Then a first on-signal is output via the connector 10. In this way, the in-vehicle steering switch 3 can be manually upshifted while the vehicle is moving in a drive range. When the operating knob 5 is no longer pushed, the biasing force (returning force) of the spring 12 causes the ball 11 to return to the depression from the projection of the cam surface 4f. Thus, the operating knob 5 automatically returns to the rotationally neutral position. At the same time, the slider 14 moves away from the resistive pattern 9a and the steering switch 3 is turned off again and returns to the original drive range.

The driver pulling the operating knob 5 with his or her finger(s), e.g., index finger and/or middle finger, when the steering switch 3 is turned off, as shown in Figs. 7B and 8B, causes the operating knob 5 to rotate around the connecting pin 6 in the direction it was pulled as shown in Fig. 7C. At the same time, the ball 11 moves to the other projection of the cam surface 4f while urging the spring 12. Then, when the operating knob 5 rotates a predetermined amount from the rotationally neutral position in the direction the operating knob 5 was pushed, as shown in Fig. 8C, the slider 14 contacts the resistive pattern 9b. Accordingly, electricity is conducted to the resistive pattern 9b and the pantographic pattern 9c via the slider 14 and the steering switch 3 is turned on. Then a second on-signal is output via the connector 10. In this way, the in-vehicle steering switch 3 can be manually downshifted while the vehicle is moving in a drive range. In this case also, when the operating knob 5 is no longer pushed, the biasing force (returning force) of the spring 12 causes the ball 11 to return to the depression from the projection of the cam surface 4f. Thus, the operating knob 5 automatically returns to the rotationally neutral position. At the same time, the slider 14 moves away from the resistive pattern 9b and the steering switch 3 is turned off again and returns to the original drive range.

The in-vehicle steering switch 3 at the left in Fig. 2 operates in the exactly same way as the one at the right. Thus, the driver can upshift or downshift by pushing or pulling either the left or the right operating knob 5.

The in-vehicle steering switch 3 according to this embodiment is rotated by the driver pushing or pulling the operating knob 5 protruding into the opening 2 of the steering wheel 1. As a result, an electric signal corresponding to the rotational direction of the operating knob 5 is output, allowing upshift or downshift. Since one operating knob 5 can selectively switch between two different controls, the usability of the steering switch 3 can be improved by disposing a total of two steering switches 3 having the same functions on the left and right of the pad 1c. Moreover, the steering switch 3 employs a self-returning mechanism wherein the operating knob 5 automatically returns to the rotationally neutral position by the urging force of the spring 12 when the operating knob 5 is no longer pushed or pulled. Because of the self-returning mechanism, the steering switch 3 can smoothly and continuously switch between different controls. Since the self-returning mechanism has a simple structure including the ball 11, the spring 12, and the cam surface 4f, it does not malfunction and the production cost can be kept low.

The attachment portions 4b and 4c of the support 4 and the operating knob 5 of the in-vehicle steering switch 3 according to this embodiment are disposed between the rim 1a of the steering wheel 1 and the rotational axis of the operating knob 5. Therefore, a large part of the support 4 excluding the connecting portion 4a and the operating knob 5 of the steering switch 3 overlaps when viewed from the driver's seat. As a result, the space required for attaching one steering switch 3 is not so large. In other words, the steering switch 3 has a desirable space factor and does not have much of an adverse effect on the attachment space of other operation devices to be disposed on the steering wheel 1. For this reason, the design flexibility of the steering wheel 1 for when various other operation devices are disposed on the steering wheel 1 can be improved. In this embodiment, there is a wide space between the pair of bridgings 4d and 4e of the support 4. The spoke 1b of the steering wheel 1 can be disposed in this space without trouble. Also for this reason, the steering switch 3 has a desirable space factor.

The in-vehicle steering switch 3 according to this embodiment has an output switching unit formed of the circuit board 8 having the resistive patterns 9a to 9c and the slider 14 attached to the rotary slider unit 13. Thus, a switching mechanism for switching the on and off states at a desired operational stroke can be structured easily. For this reason, the production cost for the steering switch 3 can be kept low while obtaining a high reliability.

In the embodiment described above, the in-vehicle steering switch 3 controlled the switching of upshift and downshift. The controlling of the steering switch 3 is not limited to this and may be applied to, for example, switching an auto-cruising setting, a mute setting for audio equipment, or other controls.

In the embodiment described above, two in-vehicle steering switches 3 having the same functions are disposed on the left and the right of the steering wheel 1. However, one of the in-vehicle steering switches 3 may be omitted or each in-vehicle steering switches 3 on the left and right may be used for different controls.

In the embodiment described above, the cam surface 4f is formed on the support 4 to support the ball 11 and the spring 12 on the operating knob 5. However, contrary to this, a pusher such as a ball may be elastically pressed against the cam surface on the operating knob 5. The pusher pressed against the cam surface is not limited to a ball and may be, for example, a cylinder containing a spring and having hemispherical projections on the ends.

In the embodiment described above, an output switching unit was formed by the circuit board 8 and the slider 14. Any output switching unit is acceptable for the present invention, provided that it outputs two different electrical signals corresponding to the rotational direction of the operating knob 5. For example, two push switches disposed on the support 4 can be selectively turned on when the operating knob 5 rotates.

## Claims

1. A switch (3) for attachment to a spoke extending inwardly from the rim of a steering wheel in a vehicle, the said switch (3) comprising:
a support (4) having attachment portions (4b, 4c);
a protruding operating knob (5) being journaled with the support (4);
an elastic urging portion (12) interposed between the support (4) and the operating knob (5) for automatically returning the operating knob (5) to a rotationally neutral position; and
an output switching unit (8, 13, 14, 9a, 9b) capable of outputting two different.electrical signals corresponding to the rotational directions of the operating knob (5) when the operating knob (5) is rotated against the urging force of the elastic urging portion (12),
wherein either the support (4) or the operating knob (5) has a cam surface (4f), and a pusher (11) is interposed between the cam surface (4f) and the elastic urging portion (12) and is slidably pressed against the cam surface (4f); the pusher (11) is disposed on a depression of the cam surface (4f), such that the biasing force of the elastic urging portion (12) causes the operating knob (5) to return to the rotationally neutral position when an operating force is no longer applied, and the support (4) comprises a connecting portion (4a),
and wherein the operating knob (5) has a pair of arms (5b, 5c) by means of which the operating knob (5) is rotatably fixed to said connecting portion (4a);
**characterized in that:**
a) one (5b) of the arms (5b, 5c) bends at an acute angle near a rotation axis of the operating knob (5);
b) the support (4) further includes a pair of attachment portions (4b, 4c), and a pair of bridgings (4d, 4e) extending parallel to each other, in the direction in which the tip of the bent arm (5b) extends, between the attachment portions (4b, 4c) respectively and the connecting portion (4a);
c) one of the bent arm (5b) and the one (4d) of the bridgings (4d, 4e) extending along the bent arm (5b) has said cam surface (4f), and the other has said pusher (11) and the elastic urging member (12).

2. A switch according to claim 1, wherein
the output switching unit comprises a rotary slider unit (13) having a slider (14) and engaged to the other arm (5c) of the operating knob (5), and a circuit board (8) having conductive patterns (9a, 9b) and fixed to the support (4), and
the slider (14) slides on the conductive patterns (9a, 9b) by rotating the operating knob (5).

## Patentansprüche

1. Schalter (3) zur Befestigung an einer Speiche, die sich von dem Rand eines Lenkrads in einem Fahrzeug nach innen erstreckt, wobei der Schalter (3) Folgendes aufweist:
eine Trägereinrichtung (4) mit Befestigungsbereichen (4b, 4c);
einen vorstehenden Betätigungsknopf (5), der mittels der Trägereinrichtung (4) drehbar gelagert ist;
einen elastischen Druckbeaufschlagungsbereich (12), der zwischen der Trägereinrichtung (4) und dem Betätigungsknopf (5) angeordnet ist, um den Betätigungsknopf (5) automatisch in eine rotationsmäßig neutrale Position zurückzuführen; und
eine Ausgangsschalteinheit (8, 13, 14, 9a, 9b), die zum Ausgeben von zwei verschiedenen elektrischen Signalen entsprechend der jeweiligen Rotationsrichtung des Betätigungsknopfes (5) in der Lage ist, wenn der Betätigungsknopf (5) entgegen der Druckbeaufschlagungskraft des elastischen Druckbeaufschlagungsbereichs (12) rotationsmäßig bewegt wird,
wobei entweder die Trägereinrichtung (4) oder der Betätigungsknopf (5) eine Steuerfläche (4f) aufweist und ein Drückelement (11) zwischen der Steuerfläche (4f) und dem elastischen Druckbeaufschlagungsbereich (12) angeordnet ist und in verschiebbarer Weise gegen die Steuerfläche (4f) gedrückt ist;
wobei das Drückelement (11) in einer Vertiefung der Steuerfläche (4f) derart angeordnet ist, dass die Vorspannkraft des elastischen Druckbeaufschlagungsbereichs (12) den Betätigungsknopf (5) zum Zurückkehren in die rotationsmäßig neutrale Position veranlasst, wenn keine Betätigungskraft mehr aufgebracht wird,
wobei die Trägereinrichtung (4) einen Verbindungsbereich (4a) aufweist, und wobei der Betätigungsknopf (5) ein Paar Arme (5b, 5c) aufweist, durch die der Betätigungsknopf (5) an dem Verbindungsbereich (4a) drehbar angebracht ist;
**dadurch gekennzeichnet,**
a) **dass** einer (5b) der Arme (5b, 5c) in der Nähe der Rotationsachse des Betätigungsknopfes (5) in einem spitzen Winkel gebogen ist;
b) **dass** die Trägereinrichtung (4) ferner ein Paar Befestigungsbereiche (4b, 4c) sowie ein Paar Überbrückungsbereiche (4d, 4e) aufweist, die sich parallel zueinander in der Richtung, in der sich das Ende des gebogenen Arms (5b) erstreckt, zwischen den jeweiligen Befestigungsbereichen (4b, 4c) und dem Verbindungsbereich (4a) erstrecken;
c) **dass** ein Element von dem gebogenen Arm (5b) und dem einen (4d) der Überbrückungsbereiche (4d, 4e), der sich den gebogenen Arm (5b) entlang erstreckt, die Steuerfläche (4f) aufweist und das jeweils andere Element das Drückelement (11) und das elastische Druckbeaufschlagungselement (12) aufweist.

2. Schalter nach Anspruch 1,
**dadurch gekennzeichnet, dass** die Ausgangsschalteinheit eine drehbare Gleiteinheit (13), die ein Gleitstück (14) aufweist und mit dem anderen Arm (5c) des Betätigungsknopfes (5) in Eingriff steht, sowie eine Schaltungsplatte (8) aufweist, die leitfähige Strukturen (9a, 9b) aufweist und an der Trägereinrichtung (4) befestigt ist, und
dass das Gleitstück (14) aufgrund einer Rotationsbewegung des Betätigungsknopfes (5) eine Gleitbewegung auf den leitfähigen Strukturen (9a, 9b) ausführt.

## Revendications

1. Commutateur (3) à fixer sur un rayon s'étendant vers l'intérieur, depuis le rebord d'un volant de direction dans un véhicule, ledit commutateur (3) comprenant :
un support (4), ayant des parties de fixation (4b, 4c) ;
un bouton de commande faisant saillie (5), tourillonné avec le support (4) ;
une partie de poussée élastique (12), interposée entre le support (4) et le bouton de commande (5), pour renvoyer automatiquement le bouton de commande (5) en une position rotativement neutre et
une unité de commutation en sortie (8, 13, 14, 9a, 9b), apte à produire deux signaux électriques différents, qui correspondent aux sens de rotation du bouton de commande (5), quand le bouton de commande (5) est mis en rotation contre la force de poussée de la partie de poussée élastique (12),
dans lequel soit le support (4), soit le bouton de commande (5) a une surface de came (4f) et un poussoir (11) est interposé entre la surface de came (4f) et la partie de poussée élastique (12) et est comprimé à coulissement contre la surface de came (4f) ; le poussoir (11) est disposé sur un enfoncement de la surface de came (4f), de sorte que la force d'inclinaison de la partie de poussée élastique (12) amène le bouton de commande (5) à repartir en position rotativement neutre, quand une force de commande n'est plus appliquée, et le support (4) comprend une partie de connexion (4a) et
dans lequel le bouton de commande (5) a une paire de bras (5b, 5c), au moyen desquels le bouton de commande (5) est immobilisé à rotation sur ladite partie de connexion (4a) ;
**caractérisé en ce que** :
a) l'un (5b) des bras (5b, 5c) fléchit en formant un angle aigu, près d'un axe de rotation du bouton de commande (5) ;
b) le support (4) comporte en outre une paire de parties de fixation (4b, 4c) et une paire de pontages (4d, 4e), s'étendant parallèlement l'un par rapport à l'autre, dans la direction dans laquelle s'étend le bout du bras courbé (5b), entre les parties de fixation (4b, 4c) respectivement et la partie de connexion (4a) ;
c) un élément parmi le bras courbé (5b) et le pontage (4d) parmi les deux pontages (4d, 4e) s'étendant le long du bras courbé (5b), a ladite surface de came (4f) et l'autre élément a ledit poussoir (11) et l'élément de poussée élastique (12).

2. Commutateur selon la revendication 1, dans lequel
l'unité de commutation en sortie comprend une unité formant coulisse rotative (13), ayant une coulisse (14) et étant en prise sur l'autre bras (5c) du bouton de commande (5) et une plaquette de circuits imprimés (8) ayant des modèles conducteurs (9a, 9b) et étant immobilisée sur le support (4) et
la coulisse (14) coulisse sur les motifs conducteurs (9a, 9b) en faisant tourner le bouton de commande (5).
